# EUROPEAN PATENT APPLICATION

(11) **EP 1 795 503 A1**
(43) Date of publication of application: **13.06.2007**
(21) Application number: 06122005.9
(22) Date of filing: 10.10.2006
(51) Int. Cl.: C02F 1/32

(54) **Water-purification device for a potable water system**

(30) Priority: 09.12.2005 US 749242 P
(71) Applicant: Goodrich Corporation, Charlotte, North Carolina 28217-4578 (US)
(72) Inventor: Shearer, Jon Douglas, Hartville, OH 44632 (US); Aeschliman, Carl Raymond, Rittman, OH 44270 (US)
(74) Representative: Hilleringmann, Jochen

(57) **Abstract**

A water-purification device (22) for a potable water system comprising a chamber (23) through which water flows, a plurality of light-emitting diodes (24) that radiate ultraviolet light into the water within the chamber (23), and a driver circuit (26) providing power to the light-emitting diodes. The light-emitting diodes (24) can be positioned within or outside of the chamber (23) and they can be electrically connected in series. The drive circuit (26) receives voltage from a power source (e.g., an onboard power source on an aircraft) and can include a feedback accessory (40), an input accessory (42) and/or a fault-status accessory (44).

## Description

### FIELD OF THE INVENTION

This invention relates generally to a water-purification device for a potable water system.

### BACKGROUND OF THE INVENTION

A potable water system can be installed, for example, in an aircraft to supply cabin outlet facilities (e.g., handwash basins in lavatories and sinks in onboard kitchens) with fresh water. A potable water system can comprise a water storage tank, a supply line and tap lines which connect the water supply tank to the outlet facilities. The supply line will often include a device which emits ultraviolet light into the water for purification purposes. If the potable water system is installed in an aircraft, the water-purification device receives operational power from an onboard source.

### SUMMARY OF THE INVENTION

The present invention provides a lightweight and/or low-power ultraviolet device which purifies water in a potable water system. In this water-purification device, light emitting diodes produce ultraviolet light and a driver circuit powers the light emitting diodes. With specific reference to aircraft applications, the diodes are lightweight components when compared to, for example, the gas discharge lamps (with large heavy ballasts) conventionally used for purification purposes in potable water systems. In any event, the lightweight and/or low-power advantages of the water-purification device are achieved without compromising effectiveness and/or efficiency.

More particularly, the present invention provides a water-purification device comprising a chamber through which water flows, at least one light-emitting diode that radiates ultraviolet light into the water within the chamber, and a driver circuit for providing power to the light-emitting diode(s). Preferably, a plurality of light-emitting diodes are electrically connected in series by conductors. The drive circuit includes a controller which controls output of power to the light-emitting diodes via appropriate circuitry. The water-purification device and/or the drive circuit can include a feedback accessory (providing information regarding emission and/or purification), an input accessory (allowing the input of optional and/or required commands) and/or a fault-status accessary.

In another embodiment of the present invention the conductors connect the plurality of light-emitting diodes in series.

In a further embodiment of the present invention the conductors are positioned within the chamber.

In still another embodiment of the present invention at least portions of the conductors are positioned outside the chamber.

In another embodiment of the present invention the light-emitting diodes are positioned outside of the chamber.

In a further embodiment of the present invention the plurality of light-emitting diodes are electrically connected by conductors.

In still another embodiment of the present invention the conductors connect the plurality of light-emitting diodes in series.

In another embodiment of the present invention a wall structure defining the chamber has at least a portion which allows for transmission of ultraviolet light.

In a further embodiment of the present invention the ultraviolet light has radiation wavelengths between 200 nm to 400 nm and, more specifically, between 245 nm and 285 nm.

In still another embodiment of the present invention the feedback accessory comprises means for sensing and/or measuring diode emittance data within the chamber.

In another embodiment of the present invention the sensing means comprises a photoreceptor.

In a further embodiment the present invention further comprises an input accessory for allowing the input of optional and/or required commands.

In still another embodiment the present invention further comprises a fault-status accessory.

These and other features of the invention are fully described and particularly pointed out in the claims. The following descriptive annexed drawings set forth in detail a certain illustrative embodiment of the invention, this embodiment being indicative of but one of the various ways in which the principles of the invention may be employed.

### DRAWINGS

- Fig. 1: is a schematic illustration of a potable water system including an ultraviolet water-purification device according to the present invention.
- Figures 2A - 2C: are schematic illustrations of the ultraviolet water-purification device with different arrangements of the light emitting diodes and/or the conductors therebetween.
- Fig. 3: is a schematic illustration of the driver circuit.

### DETAILED DESCRIPTION

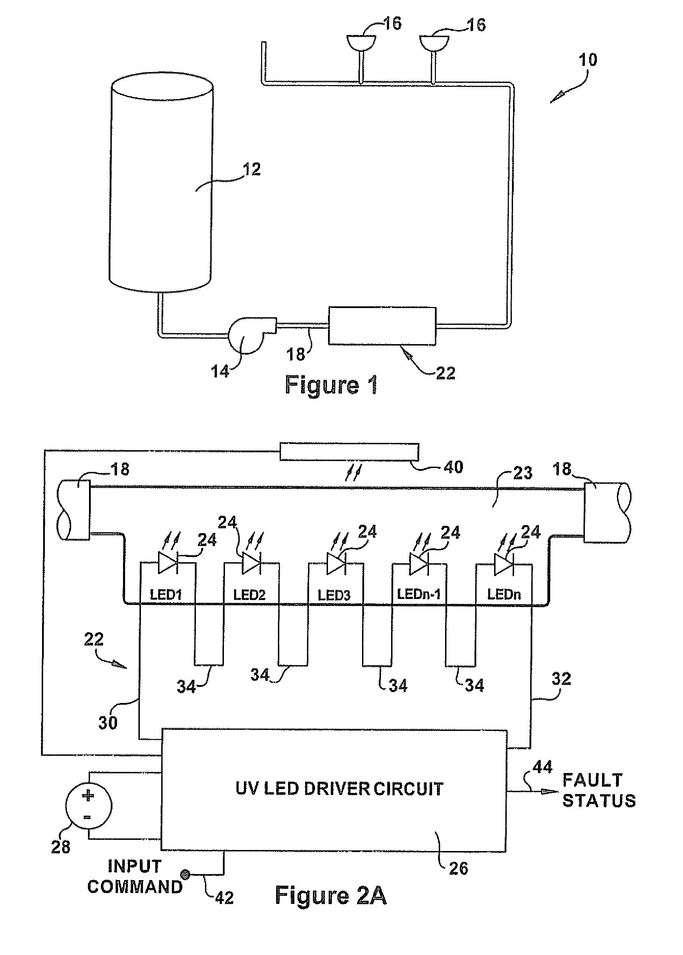

Referring now to the drawings, and initially to Figure 1, a potable water system 10 according to the present invention is schematically shown. The potable water system 10 can comprises a water tank 12, a pump 14, and outlet facilities 16. In the illustrated system 10, the pump 14 conveys water from the tank 12 through a supply line 18 (e.g., pipes, tubes or other hydraulic conduits) from which water can be tapped at the outlet facilities 16. Untapped water can be directed to another device (e.g., a coffee maker) and/or drain.

The potable water system 10 can also include other components such as, for example, another tank, another pump, a filtering device, tank-filling means, and/or flow-directing valves. Additionally or alternatively, a potable water system without a tank 12 and/or a pump 14 is possible with, and contemplated by, the present invention. For example, other sources of pressurization (e.g., bleed air) could be employed. If is further noted that the potable water system 10 could instead be a recirculating system wherein untapped water is returned to the storage tank.

The potable water system 10 further comprises a water-purification device 22 according to the present invention. In the illustrated embodiment, the system 10 has one device 22 is positioned in the supply line 18. The water-purification device 22 could be positioned elsewhere in the system and/or additional devices 22 could be provided in the supply line 18 or in any other suitable location in the system 10. The device location(s) within the system 10 will typically be selected to optimize its purification purposes while also being compatible with installation, inspection and maintenance. Typically, a filter is positioned upstream of the water-purification device 22 for removal of non-organic particles.

The potable water system 10 of the present invention can be designed specifically for use on a vehicle, and more specifically for use on aircraft. In an aircraft application, the outlet facilities 16 can comprise, for example, cabin facilities such as wash basins in lavatories and/or sinks in onboard kitchens. In any event, lightweight and/or low-power-consumption components (with no sacrifice on effectiveness and/or efficiency) are usually welcomed in aircraft potable water systems.

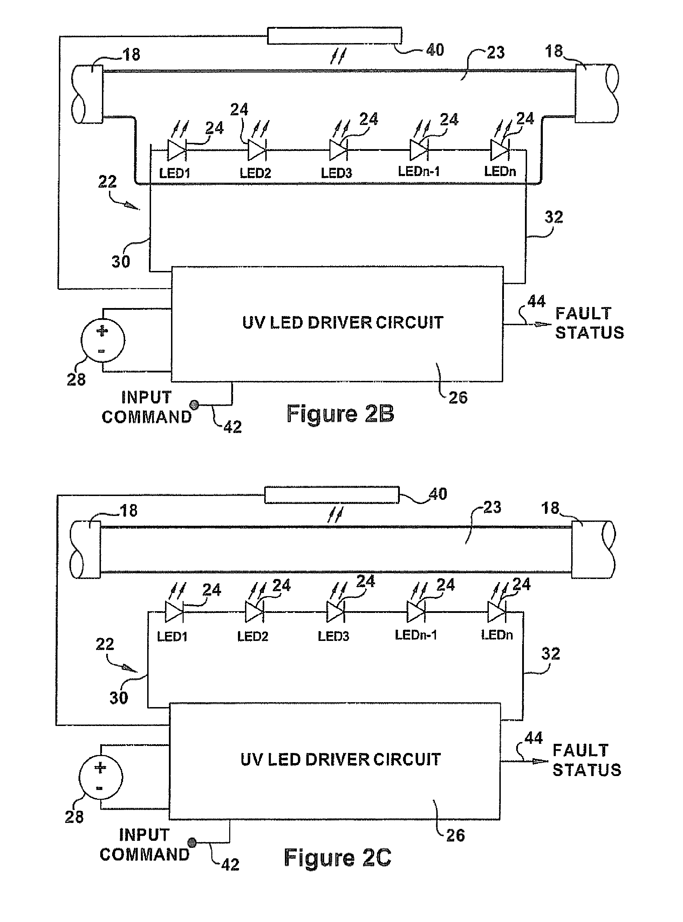

Referring now to Figures 2A-2C, the water-purification device 22 is schematically shown in more detail. The device 22 includes a purification chamber 23 which, as discussed above, can be part of the supply line 18 of the potable water system 10. The chamber 23 shown in Figure 2C is defined by wall structure having at least a portion which allows for transmission of ultraviolet light. For example, an entire cylindrical wall defining the chamber 23 can be made of an UV-transmissive material or a cylindrical wall defining the chamber 23 can have a UV-transmissive window. The chamber 23 shown in Figure 2A and the chamber 23 shown in Figure 2B need not allow for the transmission of ultraviolet light.

The water-purification device 22 also includes at least one light-emitting diode 24. A light-emitting diode (LED) is a semiconductor that emits incoherent narrow-spectrum light when electrically biased in the forward direction. The light-emitting diode(s) 24 of the present invention can be light emitting diodes of all types, such as light emitting polymers, semiconductor dies that produce light in response to current, organic light-emitting diodes, electro-luminescent strips, and other such systems. The light-emitting diode(s) 24 may be packaged, non-packaged, surface mount, chip on board, and/or other configurations. The light-emitting diodes 24 can also be associated with a material (e.g., a phosphor) which converts emitted energy to a different wavelength.

Preferably, the water-purification device 22 includes a plurality of light-emitting diodes 24. For example, the device 22 in the drawings includes five light-emitting diodes 24 for the sake of ease in illustration, and a diode-number within this range (e.g., two to ten) might be sufficient in some situations. However, in some situations (e.g., high water volume, fast flow rate, elevated contamination risk, etc.), several more diodes 24 (e.g., ten to thirty, fifty, a hundred, and/or more) may be necessary and/or desired. In any event, the plurality of light-emitting diodes 24 can be of the same or different designs, depending upon the needs of a particular potable water system.

In the present invention, the light-emitting diodes 24 produce ultraviolet light (i.e., light in the ultraviolet spectrum and the deep blue region of the visible spectrum). The light preferably has radiation wavelengths between 200 nm to 400nm, and more preferably (if possible) between 245 nm and 285 nm, which is the EPA stated optimum range for germicidal effects. Itraviolet light from the diodes 24 can potentially kill 99% of bacteria with a 30mW-sec/cm² exposure.

Candidate light-emitting diode materials (i.e., materials having bandgap energy corresponding to the desired wavelength) can include, for example, gallium nitride (GaN) and associated Group III nitride compounds such as aluminum gallium nitride (AlGaN), indium gallium nitride (InGaN), and aluminum indium gallium nitride (AlInGaN). Diodes which emit light in the 200nm to 400nm range are available on the market, from, for example, Nichia Corporation of Tokoshima, Japan.

The water-purification device 22 further comprises a driver circuit 26 which receives operational power from an appropriate voltage source 28 (e.g., 28 VDC). In an aircraft application, the voltage source 28 would be an onboard power source. Onboard power sources are required for a number of aircraft functions, some being crucial for flight (e.g., electric deicers) and others (such as the potable water system 10) being only important for comfort. It is generally desirable to keep onboard power requirements to a minimum, especially for functions not crucial for flight, whereby the low power requirements of the light-emitting diodes 24 will usually be welcomed.

The driver circuit 26 selectively applies voltage, via conductors 30 and 32, to the light-emitting diodes 24 to cause them to emit radiation in the desired wavelength range (i.e., 200nm to 400nm). The application of the voltage can be applied on a periodic basis, upon detection of relatively high levels of contamination, upon a predetermined maintenance cycle, and/or upon tapping of water from the supply line 18. If the potable water system 10 is a recirculating system, a continuous application of voltage may be desirable to maintain water purity without any sudden spikes in power requirements. That being said, the water-purification device 22 may be part of a larger power cycle in which a variety of aircraft components are powered at alternate times whereby intermittent operation may be most plausible.

If the water-purification device 2 has a plurality of light-emitting diodes 24, they can be connected to each other by conductors 34. The position of the light-emitting diodes 24 relative to the chamber 23 and/or within the chamber 23 may be based on purification efficiency, construction requirements, inspection abilities, and/or maintenance convenience. Likewise, the position of the conductors 34 may be based on construction, inspection and maintenance issues, as well as electrical issues, such as the risk of short-circuiting.

In Figure 2A, the light-emitting diodes 24 are positioned within the water chamber 23 and the conductors 34 extend outside the chamber 23. In Figure 2B, both the light-emitting diodes 24 and the conductors 34 are positioned within the water chamber 23. In these embodiments, the diodes 24 can be made to withstand water immersion and/or they can be positioned in a protective (UV transparent) tube within the chamber 23. With particular reference to Figure 2A, the chamber-defining wall can have ports or other means for electrically connecting the diodes 24 to the conductors 34. With particular reference to Figure 2B, the conductors 34 can be insulated with a waterproof material (e.g., plastic) to avoid short-circuiting situations.

In Figure 2C, both the light-emitting diodes 24 and the conductors 34 are positioned outside the transmissive chamber 23. This positioning eliminates water-damage and/or short-circuiting concerns (and/or the need to install a protective tube within the chamber 23). However, an outside-chamber position introduces the issues of proximity as emission and intensity levels will be influenced by the distance of the diodes 24 from the water.

In the illustrated embodiment, the light-emitting diodes 24 are connected in series as this will often be the most efficient arrangement from a power requirement standpoint. However, the light-emitting diodes 24 could instead be connected in parallel if possible and/or practical for a certain application, especially if power requirements are not a critical design constraint. Alternatively, the light-emitting diodes 24 could be individually connected to the driver circuit 26 (i.e., each light-emitting diode 24 having conductors 30 and 32) for their independent operation of a specific diodes and/or group of diodes.

The water-purification device 22 and/or the driver circuit 26 can include a feedback accessory 40 which provides information regarding emission and/or purification. For example, the feedback accessory 40 can comprise a photoreceptor or other means for sensing and/or measuring diode emittance data within the chamber 23. Additionally or alternatively, the feedback accessory 40 can comprise means for measuring water-purification levels within the chamber 23. In either or any case, the feedback accessory 40 would provide the relevant data to power and/or intensity controlling components for adjustments in diode emittance. In the illustrated embodiment, the accessory 40 receives feedback from a single region within the chamber 23, preferably by a plurality of photoreceptors (or other sensors) providing independent emission and/or purification data. Additional feedback regions within the chamber 23, and/or feedback regions in the supply line 18 and/or the storage tank 12 are certainly possible with, and contemplated by, the present invention.

The water-purification device 22 and/or the driver circuit 26 can additional include an input accessory 42 for allowing the input of optional and/or required commands. Based on these commands, power and/or intensity controlling components could activate/deactivate particular diodes, adapt power supplies, and/or adjust intensity levels, depending upon circuit capabilities. The optional and/or required commands could be input during start-up, during maintenance, and/or during flight operation of the water-purification device 22.

The water-purification system 22 and/or the drive circuit 26 can additionally or alternatively comprise a fault-status accessory 24. The accessory 24 could track the operation or non-operation of crucial and non-crucial components and provide fault-status signals or messages. For example, the fault-status accessory 24 could indicate that certain diodes are not functioning to proper levels of emission and/or that other circuitry is not functioning in their intended manner. The fault-status signals (or messages) could be displayed on panels observed by aircraft crew during flight and/or on portable displays used by maintenance crews during ground inspections. With specific reference to maintenance applications, the accessory 24 could be used to store, track, and/or convey service status information.

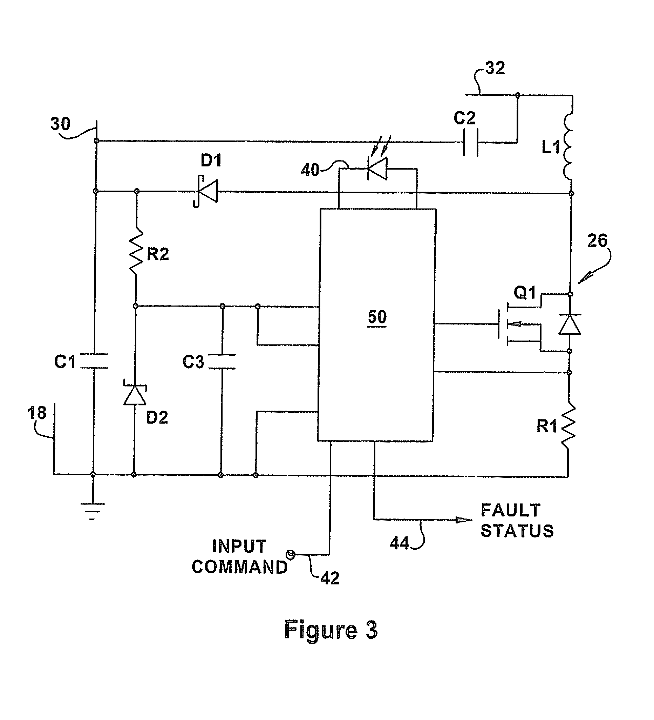

Referring now additionally to Figure 3, the driver circuit 26 is shown in more detail. The illustrated driver circuit 26 includes a controller 50 which can be, for example, a programmed microcontroller, a PID controller, a microprocessor, or any other appropriate controlling mechanism. The controller 50 can receive input from the feedback accessory 40, can receive input from the command accessory 42, and/or can output signals/messages through the fault-status accessory 44.

The power source 18 provides voltage to the controller 50 and the controller 50 controls the output of power to the light-emitting diodes 24 via appropriate circuitry. In the illustrated embodiment, C1 and C2 are storage elements for the diode drive current, and C3 is a storage element for controller's power supply. D1 is a schottkey diode used for ultra-fast switching to improve power efficiency and improve energy transfer to the light-emitting diodes 24. D2 is a voltage reference diode and provides protection for the controller 50. R1 is a current shunt and monitors the level of current applied to the light-emitting diodes 24. R2 is a voltage dropping device and regulates the amount of current flowing into the D2 voltage reference diode. L1 is an energy storage device. Q1 is a MOSFET transistor which switches ON and OFF and controls the amount of current stored in the L1 device, so that when Q1 turns off, current flowing through the L1 device is forced through the light-emitting diodes 24.

One may now appreciate that the present invention provides a water-purification device 22 having lightweight and/or low-power-consumption components, with no sacrifice on effectiveness and/or efficiency. Although the invention has been shown and described with respect to a certain preferred embodiment, it is obvious that equivalent and obvious alterations and modifications will occur to others skilled in the art upon the reading and understanding of this specification. The present invention includes all such alterations and modifications, and is limited only by the scope of the following claims.

## Claims

1. A water-purification device (22) for a potable water system (10), comprising:
- a chamber (23) through which water flows,
- at least one light-emitting diode (24) that radiates ultraviolet light into the water within the chamber (23), and
- a driver circuit (26) for providing power to the light-emitting diode(s) (24).

2. A water-purification device (22) as set forth in claim 1, wherein the light-emitting diode (24) is positioned within the chamber (23).

3. A water-purification device (22) as set forth in claim 1, wherein the light-emitting diode (24) is positioned outside the chamber (23) and emits light through a transmissive portion of chamber-defining walls.

4. A water-purification device (22) as set forth in any of the preceding claim, comprising a plurality of the light-emitting diodes (24) that are electrically connected by conductors (34).

5. A water-purification device (22) as set forth in any of the preceding claims, wherein the bandgap material of the light-emitting diode(s) (24) comprises gallium nitride (GaN) and/or associated nitride compounds.

6. A water-purification device (22) as set forth in any of the preceding claims, including a feedback accessory (40) which provides information regarding emission and/or purification, an input accessory (42) for allowing the input of optional and/or required commands; and/or a fault-status accessory (44).

7. A water-purification device (22) as set forth in any of the preceding claims, wherein the drive circuit (26) includes a controller (50) which controls output of power to the light-emitting diodes (24) via appropriate circuitry.

8. A water-purification device (22) as set forth in the preceding claim, wherein the circuitry comprises:
- storage elements (C1,C2) for the diode drive current,
- a storage element (C3) for the power supply,
- a switch (D1) improving power efficiency and improve energy transfer to the light-emitting diodes (24),
- a voltage reference diode (D2),
- a current shunt and current monitor (R1),
- a current-regulating device (D2) for the voltage reference diode (D2),
- an energy storage device (L1), and/or
- a transistor (Q1) which controls the amount of current stored in the storage device (L1).

9. A potable water system (10) comprising a water line (18), outlet facilities (16) which tap water from the water line (18), and a water-purification device (22) as set forth in any of the preceding claims positioned in water line (18).

10. A potable water system (10) as set forth in the preceding claim installed on an aircraft, with driver circuit (26) being powered by an on-board power source (28).
